# FASCICULE DE BREVET EUROPEEN

(11) **EP 4 001 634 B1**
(45) Date de publication et mention de la délivrance du brevet: **13.12.2023**
(21) Numéro de dépôt: 20209328.2
(22) Date de dépôt: 23.11.2020
(51) Int. Cl.: F03B 17/02

(54) **GÉNÉRATRICE À COLONNE DE LIQUIDE**
FLÜSSIGKEITSSÄULE-GENERATOR
LIQUID COLUMN GENERATOR

(43) Date de publication de la demande: 25.05.2022
(73) Titulaire: Morath, Frédéric, 3979 Grône (CH)
(72) Inventeur: Morath, Frédéric, 3979 Grône (CH)
(74) Mandataire: Noll, Ronald

(56) Documents cités:
- WO-A1-2020/053486
- KR-A- 20030 013 892
- US-A- 4 267 695

## Description

### DOMAINE TECHNIQUE

La présente invention se rapporte de manière générale à une génératrice permettant de produire de l'énergie mécanique ou électrique à partir d'une source d'énergie renouvelable, en particulier de l'eau ou tout autre liquide (voir par exemple WO 2020/053486 A1). Plus particulièrement, la présente invention se rapporte à une telle génératrice exploitant la pression exercée par une colonne de liquide.

### ARRIÈRE-PLAN TECHNOLOGIQUE

Divers types de génératrices existent dans le domaine, notamment des génératrices permettant de produire de l'énergie à partir d'une source d'énergie renouvelable, en particulier hydraulique, géothermique, éolienne ou solaire. Pour une utilisation domestique, l'on fait usuellement appel à des sources d'énergie géothermique, éolienne et/ou solaire, la production d'énergie à partir d'une source d'énergie hydraulique étant usuellement réservée à des installations imposantes et complexes, tel des barrages hydroélectriques ou des installations à conduite d'eau forcée.

Il subsiste un besoin pour des génératrices adaptées à un usage domestique exploitant de l'eau (ou autre liquide) comme source d'énergie renouvelable.

### EXPOSÉ DE L'INVENTION

Un but général de la présente invention est de proposer une génératrice permettant de produire de l'énergie mécanique ou électrique à partir d'une source d'énergie renouvelable, en l'occurrence un liquide, telle l'eau.

Plus particulièrement, un but de la présente invention est de proposer une telle génératrice ne nécessitant pas la mise en oeuvre de moyens complexes et qui soit relativement peu coûteuse à produire.

Par ailleurs, un but de la présente invention est de proposer une telle solution qui sont particulièrement adaptée à un usage domestique.

Un autre but de la présente invention est de proposer une solution qui constitue une alternative ou un complément viable à la génération d'énergie par d'autres sources d'énergie renouvelable.

Il est ainsi proposé une génératrice dont les caractéristiques sont énumérées dans la revendication 1, à savoir une génératrice comportant :
- une colonne d'alimentation verticale apte à être remplie d'une certaine quantité de liquide ;
- une vanne d'admission disposée à la base de la colonne d'alimentation verticale ;
- un réservoir étanche en communication avec la colonne d'alimentation verticale via ladite vanne d'admission, lequel réservoir étanche est apte à être rempli de liquide ;
- une vanne d'échappement disposée sur ledit réservoir étanche et apte à libérer la pression engendrée dans ledit réservoir étanche ;
- un dispositif formant piston disposé à l'intérieur dudit réservoir étanche de sorte à être immergé dans le liquide contenu dans le réservoir étanche, lequel dispositif formant piston est apte à être mis en mouvement alternatif entre une position haute et une position basse, le dispositif formant piston comportant une première portion formant flotteur apte à amener le dispositif formant piston dans la position haute et une seconde portion formant axe de sortie ; et
- un dispositif convertisseur couplé à l'axe de sortie, lequel dispositif convertisseur est apte à convertir le mouvement alternatif du dispositif formant piston en énergie mécanique ou électrique.

La génératrice selon l'invention est configurée de sorte que, en fonctionnement, le réservoir étanche est rempli de liquide, et de sorte à répéter la séquence de phases opératoires suivantes afin d'induire le mouvement alternatif du dispositif formant piston, à savoir :
- une première phase opératoire durant laquelle la vanne d'admission est fermée et la colonne d'alimentation verticale est remplie de liquide de manière à former une colonne de liquide au-dessus du réservoir étanche ;
- une deuxième phase opératoire durant laquelle la vanne d'échappement est fermée et la vanne d'admission est ouverte afin de mettre en communication la colonne d'alimentation verticale et le réservoir étanche, engendrant une augmentation de la pression dans le réservoir étanche et causant un déplacement en position basse du dispositif formant piston ; et
- une troisième phase opératoire durant laquelle la vanne d'admission est fermée et la vanne d'échappement est ouverte afin de libérer la pression excédentaire formée à l'intérieur du réservoir étanche, permettant au dispositif formant piston de retourner en position haute sous l'action de la première portion formant flotteur.

Préférablement, la seconde portion formant axe de sortie comporte une pluralité d'axes de sortie individuels. Dans ce contexte, chaque axe de sortie peut en particulier être couplé à un dispositif de flottaison qui lui est propre, les dispositifs de flottaison étant couplés les uns aux autres afin de constituer la première portion formant flotteur du dispositif formant piston.

Selon une variante préférée de l'invention, chaque axe de sortie est pourvu d'une manchette compressible assurant une étanchéité entre le liquide contenu dans le réservoir étanche et une partie de l'axe de sortie disposée à l'intérieur du réservoir étanche, la manchette compressible définissant un volume compressible dépourvu de liquide englobant la partie de l'axe de sortie disposée à l'intérieur du réservoir étanche.

La première portion formant flotteur peut avantageusement former également la tête du dispositif formant piston. Alternativement, une portion formant tête de piston pourrait être disposée au-dessus de la première portion formant flotteur.

Dans une variante préférée, l'axe de sortie émerge en partie à l'extérieur du réservoir étanche et le dispositif convertisseur est couplé à la partie de l'axe de sortie émergeant à l'extérieur du réservoir étanche. Dans ce contexte, eu égard à l'utilisation de la manchette compressible susmentionnée, cette manchette compressible est préférablement interposée entre la première portion formant flotteur et une paroi intérieure du réservoir étanche. L'axe de sortie peut en particulier émerger au travers d'une partie inférieure du réservoir étanche.

Le dispositif convertisseur peut en particulier comporter un mécanisme apte à convertir le mouvement alternatif du dispositif formant piston en un mouvement rotatif. Dans ce contexte particulier, il est outre avantageux d'équiper par ailleurs le dispositif convertisseur d'un alternateur entraîné par le mouvement rotatif afin de produire de l'énergie électrique.

Selon une variante, la génératrice comporte en outre un dispositif de commande automatique de l'ouverture et de la fermeture des vannes d'admission et d'échappement, tel un distributeur mécanique.

Selon une autre forme de réalisation, la génératrice comprend en outre un démarreur pour lancer la rotation d'un volant d'inertie couplé à la génératrice, la génératrice étant configurée afin d'entretenir la mise en rotation du volant d'inertie.

À titre préféré, la colonne d'alimentation verticale est configurée pour permettre la formation d'une colonne de liquide présentant une hauteur de l'ordre de 50 cm à 150 cm. Dans ce contexte, le diamètre de la colonne d'alimentation verticale est préférablement inférieur à 20 cm.

La capacité du réservoir étanche est quant à elle préférablement de l'ordre de 20 à 50 litres, rendant la génératrice adéquate pour une utilisation domestique, des capacités plus importantes étant toutefois parfaitement envisageables.

Il est également revendiqué une installation comprenant une génératrice selon l'invention alimentée en liquide, tel que de l'eau, en particulier au moyen d'un réservoir de collecte d'eau de pluie ou d'une alimentation d'eau courante. Il serait également envisageable d'utiliser de l'eau d'évacuation délivrée en sortie d'installations sanitaires.

Dans une variante avantageuse, l'installation comporte en outre :
un réservoir d'alimentation apte à fournir le liquide nécessaire au remplissage de la colonne d'alimentation verticale ;
un réservoir de collecte apte à récupérer le liquide émanant du réservoir étanche ; et
une pompe apte à retourner le liquide du réservoir de collecte au réservoir d'alimentation.

La pompe susmentionnée est préférablement alimentée en énergie au moyen de panneaux photovoltaïques ou par éolienne.

Il est par ailleurs revendiqué un procédé de génération d'énergie mécanique ou électrique utilisant la génératrice ou l'installation selon l'invention, comportant les étapes suivantes :
a) fermeture de la vanne d'admission et remplissage de la colonne d'alimentation verticale au moyen de liquide de manière à former une colonne de liquide au-dessus du réservoir étanche rempli de liquide ;
b) fermeture de la vanne d'échappement et ouverture de la vanne d'admission afin de mettre en communication la colonne d'alimentation verticale et le réservoir étanche, engendrant une augmentation de la pression dans le réservoir étanche et causant un déplacement en position basse du dispositif formant piston ;
c) fermeture de la vanne d'admission et ouverture de la vanne d'échappement afin de libérer la pression excédentaire formée à l'intérieur du réservoir étanche, permettant au dispositif formant piston de retourner en position haute sous l'action de la première portion formant flotteur ; et
d) répétition des étapes a) à d) de sorte à induire le mouvement alternatif du dispositif formant piston et permettre au dispositif convertisseur de convertir ce mouvement alternatif en énergie mécanique ou électrique.

D'autres aspects de l'invention sont exposés dans la suite de la présente description.

### DESCRIPTION SOMMAIRE DES DESSINS

Les caractéristiques et avantages de la présente invention apparaîtront plus clairement à la lecture de la description détaillée qui suit de modes de réalisation de l'invention, lesquels sont présentés uniquement à titre d'exemples non limitatifs et sont illustrés par les dessins annexés où :
- la Figure 1 montre un diagramme schématique d'une génératrice selon un mode de réalisation de l'invention ;
- les Figure 2A-D montrent des phases opératoires successives de la génératrice de la Figure 1 ;
- la Figure 3A est une première illustration photographique d'un dispositif formant piston faisant partie de la génératrice selon un mode de réalisation de l'invention ;
- la Figure 3B est une seconde illustration photographique d'une partie supérieure du dispositif formant piston de la Figure 3A ; et
- la Figure 4 est un diagramme schématique d'une installation comprenant une génératrice selon l'invention.

### MODES DE RÉALISATION DE L'INVENTION

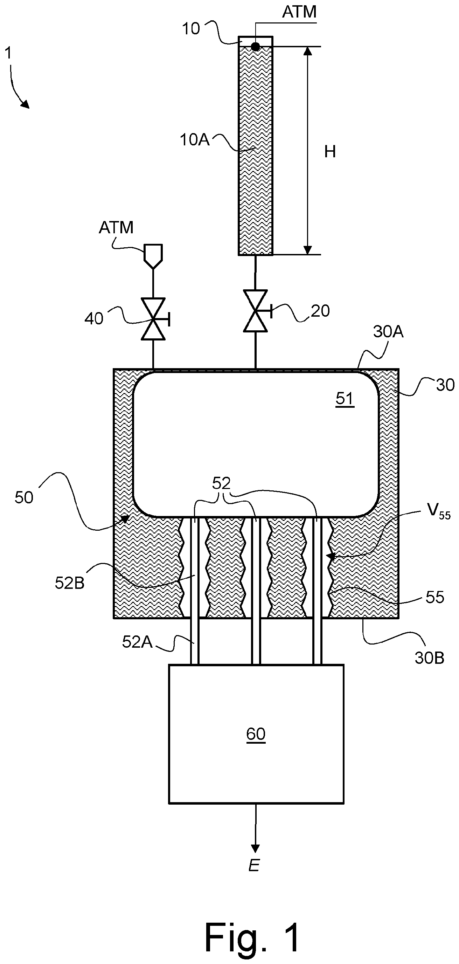

Divers aspects de la présente invention seront décrits en référence à divers modes de réalisation préférés tels qu'illustrés notamment par les Figures 1 à 4.

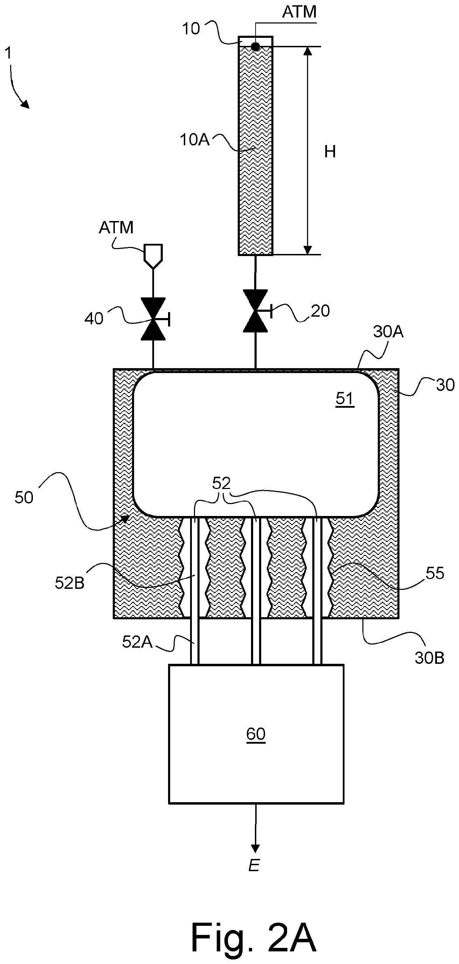

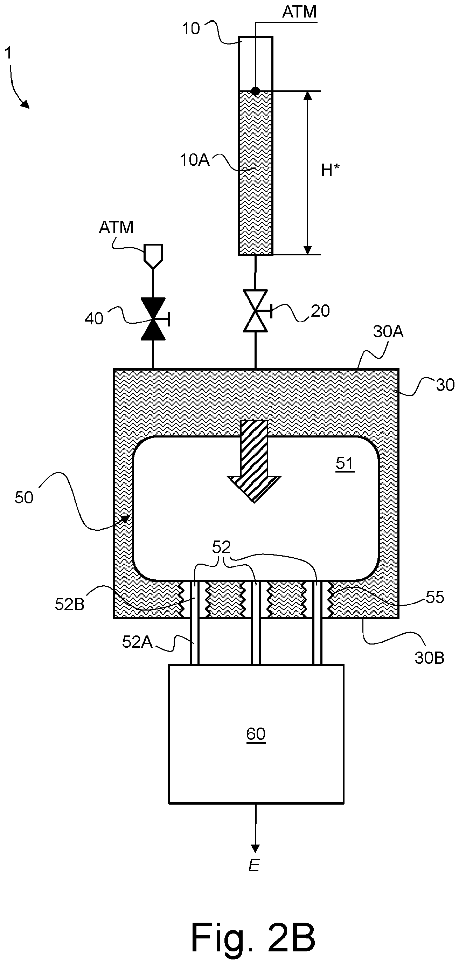

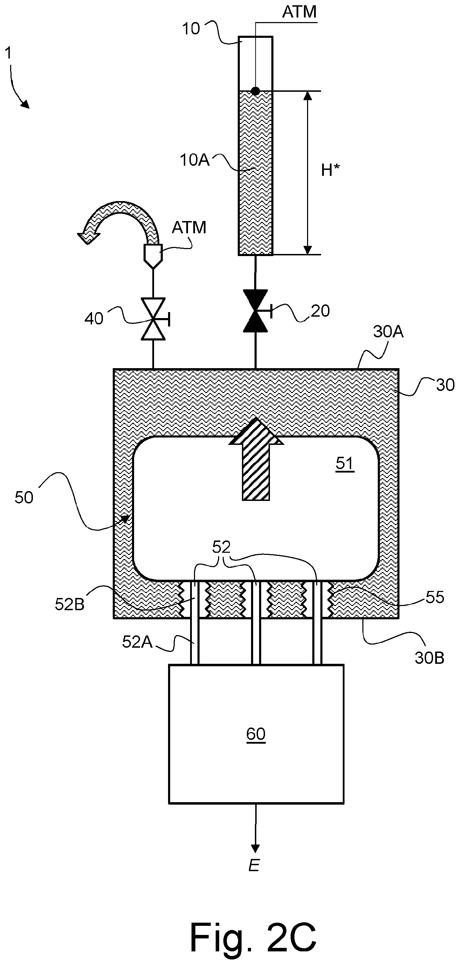

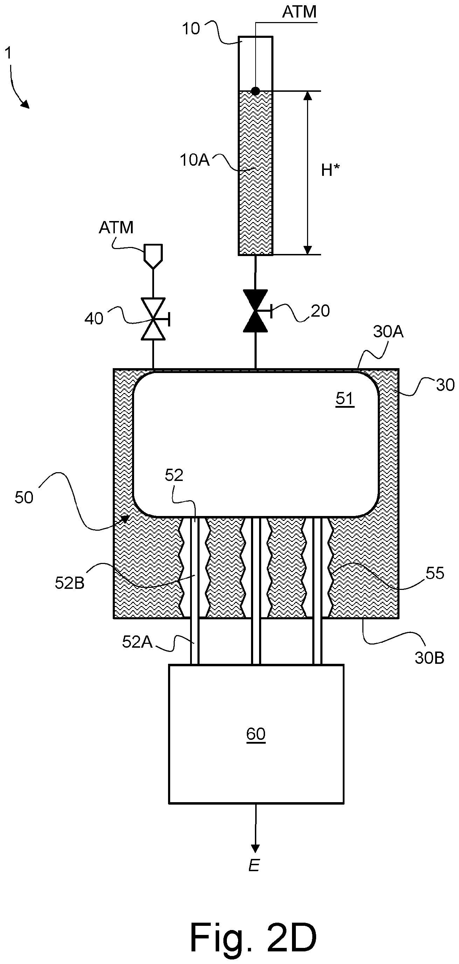

La Figure 1 est un diagramme schématique d'une génératrice, désignée globalement par la référence numérique 1, selon un mode de réalisation de l'invention. Cette génératrice 1 comporte notamment une colonne d'alimentation verticale 10 apte à être remplie d'une certaine quantité d'eau de manière à former une colonne d'eau 10A d'une hauteur H déterminée. L'on comprendra que la surface de la colonne d'eau 10A est exposée à la pression atmosphérique, désignée ATM. Cette colonne d'alimentation verticale 10 est disposée au-dessus d'un réservoir étanche 30, lui-même rempli d'eau, susceptible d'être mise en communication avec la colonne d'alimentation verticale 10 via une vanne d'admission 20 placée à la base de la colonne d'alimentation verticale 10, sur la partie supérieure 30A du réservoir étanche 30. Une vanne d'échappement 40 est par ailleurs disposée sur le réservoir étanche 30, laquelle vanne d'échappement 40 est apte à libérer la pression engendrée dans le réservoir étanche 30 et permettre l'évacuation d'excédant d'eau. Cette vanne d'échappement 40 permet ici de ramener la pression en surface du liquide contenu dans la réservoir étanche 30 à la pression atmosphérique ATM ainsi que l'expulsion d'excédant d'eau comme on le comprendra à la lecture de la description qui suit. Disposé à l'intérieur du réservoir étanche 30 se trouve un dispositif formant piston 50 qui est au moins partiellement immergé dans l'eau contenue dans le réservoir étanche 30. Ce dispositif formant piston 50 est apte à être mis en mouvement alternatif entre une position basse (voir Figures 2B et 2C) et une position haute, comme illustré (voir également Figures 2A et 2D). Dans l'exemple illustré, le dispositif formant piston 50 comporte une première portion formant flotteur 51 apte à amener le dispositif formant piston 50 dans la position haute et une seconde portion formant axe de sortie 52 émergeant ici en partie, désignée par la référence 52A, à l'extérieur du réservoir étanche 30. Dans le mode de réalisation illustré, la seconde portion formant axe de sortie 52 comporte dans les faits une pluralité d'axes de sortie individuels 52 dont une partie 52A émerge à l'extérieur du réservoir étanche 30, avantageusement au travers d'une partie inférieure 30B du réservoir étanche 30.

À titre préféré, chaque axe de sortie 52 est pourvu d'une manchette compressible 55 assurant l'étanchéité entre l'eau contenue dans le réservoir étanche 30 et la partie 52B de l'axe de sortie 52 disposée à l'intérieur du réservoir étanche 30. Chaque manchette compressible 55 défini un volume compressible, désigné V₅₅, dépourvu de liquide, englobant la partie 52B de l'axe de sortie 52 disposée à l'intérieur du réservoir étanche 30. D'autres solutions pourraient toutefois être envisagées, par exemple une solution adoptant une manchette compressible unique entourant l'ensemble des axes de sortie 52.

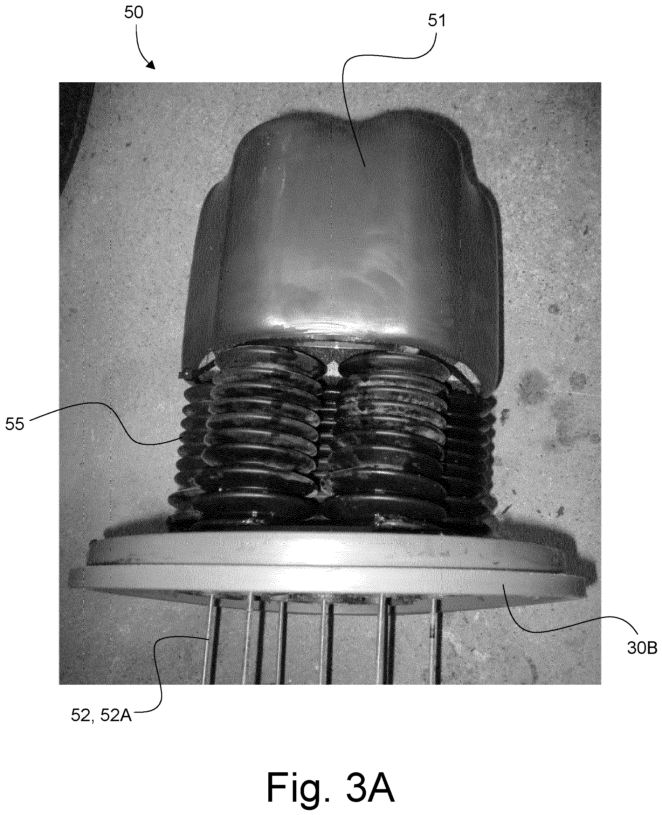

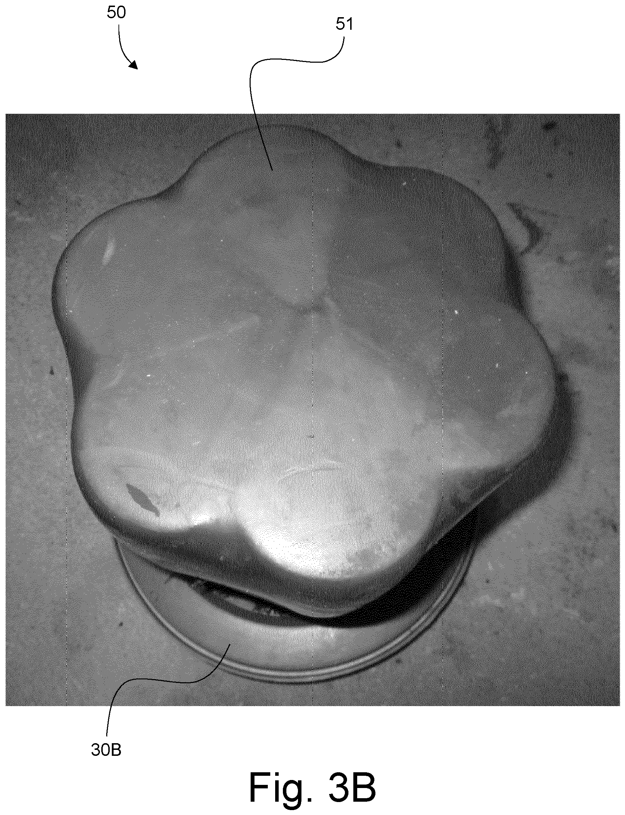

Les Figures 3A et 3B sont des illustrations photographiques d'un prototype de dispositif formant piston 50, lequel est constitué d'un ensemble de sept axes de sortie individuels 52 pourvus à leur extrémité supérieure d'un dispositif de flottaison, par exemple un bloc de polystyrène ou tout autre matériau léger et imperméable présentant une bonne capacité de flottaison. L'ensemble des dispositifs de flottaison est ici agencé sous la forme d'un tout compact et retenu par une gaine élastique de sorte à constituer la partie formant flotteur 51 du dispositif formant piston 50. Cette partie 51 constitue au demeurant la tête du dispositif formant piston 50. Visibles sur l'illustration photographique de la Figure 3A sont les manchettes compressibles 55, similaires à des manchettes de direction, montées sur les axes de sortie individuels 52, entre la portion formant flotteur 51 et la partie inférieure 30B du réservoir étanche 30, également visible sur les Figures 3A et 3B.

Faisant à nouveau référence à la Figure 1, la génératrice 1 comporte en outre un dispositif convertisseur 60 couplé ici à la partie 52A de l'axe de sortie 52 émergeant à l'extérieur du réservoir étanche 30. Ce dispositif convertisseur 60 peut être tout type de dispositif apte à convertir le mouvement alternatif du dispositif formant piston 50 en énergie mécanique ou électrique E. En particulier, le dispositif convertisseur 60 peut comporter un mécanisme, en tant que tel connu (tel un mécanisme de type vilebrequin entraîné par bielles), apte à convertir le mouvement alternatif du dispositif formant piston 50 en un mouvement rotatif. En pareil cas, le dispositif convertisseur comporte préférablement un alternateur entraîné par le mouvement rotatif afin de produire de l'énergie électrique. À titre d'exemple illustratif, il peut s'agir d'un alternateur d'éolienne à aimants permanents, en particulier des aimants permanents en néodyme. Des tests ont notamment été effectués par la Déposante au moyen d'un alternateur de marque Missouri Wind and Solar, LLC (www.mwands.com) délivrant environ 12 Volts à 150 tr/min.

Dans l'exemple illustré, la colonne d'alimentation verticale 10 est dimensionnée de manière à permettre la formation d'une colonne d'eau 10A présentant une hauteur H de l'ordre de 50 cm à 150 cm. Le diamètre interne de la colonne d'alimentation verticale 10 est ici préférablement inférieur à 20 cm. Le réservoir étanche 30 présente quant à lui une capacité de l'ordre de 20 à 50 litres. À titre illustratif, une colonne d'eau de l'ordre de 85 cm, un diamètre interne de l'ordre de 6 cm, et un réservoir étanche d'une capacité de l'ordre de 25 litres permettent une mise en oeuvre adéquate de l'invention. L'on comprendra toutefois que l'invention n'est pas spécifiquement limitée à ces dimensions. S'agissant de la hauteur H de la colonne d'eau 10A, celle-ci dépendra notamment de la hauteur sous plafond à disposition dans l'environnement dans lequel est installée la génératrice selon l'invention.

La génératrice est configurée de sorte que, en fonctionnement, le réservoir étanche 30 est rempli de liquide, et de sorte à répéter la séquence de phases opératoires suivantes décrites en référence aux Figures 2A à 2D afin d'induire le mouvement alternatif du dispositif formant piston 50.

Dans une première phase opératoire, illustrée par la Figure 2A, la vanne d'admission 20 est fermée (de même que la vanne d'échappement 40) et la colonne d'alimentation 10 est remplie d'eau de manière à former une colonne d'eau 10A de hauteur H déterminée. L'on comprendra dès lors qu'une pression est générée à la base de la colonne d'eau 10A dont l'ampleur dépend de la hauteur H de la colonne d'eau 10A.

Dans une deuxième phase opératoire, illustrée par la Figure 2B, la vanne d'admission 20 est ouverte (la vanne d'échappement 40 restant fermée) afin de mettre en communication la colonne d'alimentation verticale 10 et le réservoir étanche 30, engendrant une augmentation de la pression dans le réservoir étanche 30 et causant un déplacement en position basse du dispositif formant piston 50. Dans l'exemple illustré, l'augmentation de la pression dans le réservoir étanche 30 cause la compression des manchettes compressibles 55 et une réduction du volume compressible V₅₅ de chaque manchette 55, conduisant à une augmentation du volume d'eau admis dans le réservoir étanche 30 et une diminution correspondante de la hauteur, désignée H*, de la colonne d'eau 10A dans la colonne d'alimentation verticale 10. Les manchettes 55 présentent notamment l'avantage de n'offrir que peu de résistance à la compression lors de l'augmentation de la pression dans le réservoir étanche 30.

Dans une troisième phase opératoire, illustrée par la Figure 2C, la vanne d'admission 20 est fermée et la vanne d'échappement 40 est ouverte afin de libérer la pression excédentaire formée à l'intérieur du réservoir étanche 30. Cet équilibrage de pression permet au dispositif formant piston 50 de retourner en position haute sous l'action de la portion formant flotteur 51, une partie de l'eau contenue dans le réservoir étanche 30 étant éjectée via la vanne d'échappement 40 lors de cette phase.

Au terme de cette troisième phase opératoire, illustrée par la Figure 2D, le dispositif formant piston 50 est ainsi ramené en position haute sous l'action de la première portion formant flotteur 51, et le processus peut alors être répété afin d'induire un mouvement alternatif du dispositif formant piston 50 entre ses positions haute et basse. L'on comprendra qu'un complément d'eau est effectué dans la colonne d'alimentation verticale 10 afin de ramener la colonne d'eau 10A à la hauteur H souhaitée au début de chaque cycle.

La commande de la vanne d'admission 20 et de la vanne d'échappement 40 peut être assurée par un distributeur mécanique contrôlant le timing d'actionnement des vannes 20, 40, étant entendu que les vannes 20, 40 ne sont jamais ouvertes simultanément.

La génératrice selon l'invention opère à une vitesse relativement lente, similaire à une machine à vapeur, et il convient préférablement d'équiper cette génératrice d'un volant d'inertie et d'un démarreur afin d'assurer l'amorçage du fonctionnement de la génératrice, la génératrice étant alors configurée afin d'entretenir la mise en rotation du volant d'inertie. L'on comprendra alors que le volant d'inertie opère comme un accumulateur d'énergie sous forme mécanique.

L'alimentation en eau de la génératrice 1 peut notamment être assurée au moyen d'un réservoir de collecte d'eau de pluie ou d'une alimentation d'eau courante. Il est également envisageable d'utiliser de l'eau d'évacuation délivrée en sortie d'installations sanitaires ou tout autre liquide adéquat.

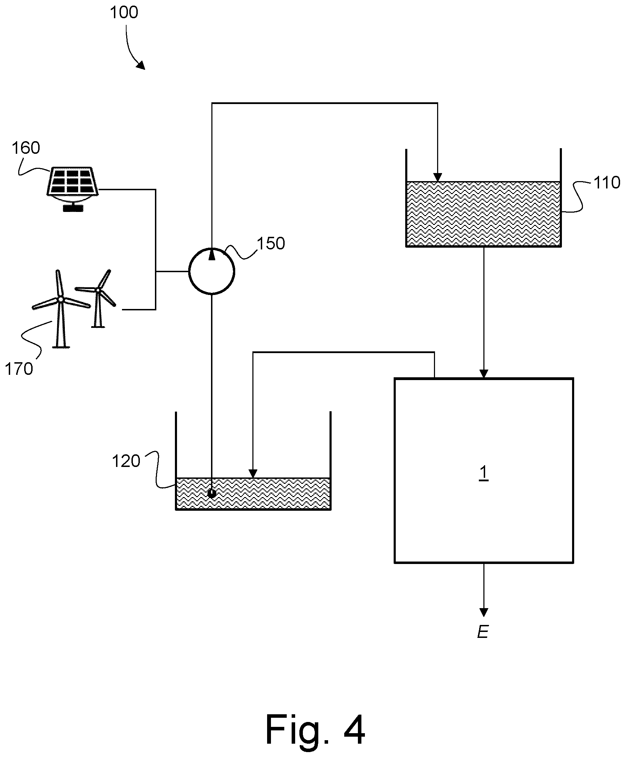

L'on comprendra qu'une certaine quantité d'eau est « consommée » lors de chaque cycle de la génératrice 1. Selon une variante avantageuse de l'invention, il est envisageable de prévoir une installation 100 telle qu'illustrée schématiquement dans la Figure 4 comprenant un réservoir de collecte 120 apte à récupérer l'eau émanant du réservoir étanche 30 de la génératrice 1 (en l'occurrence l'eau éjectée via la vanne d'échappement 40) et de retourner cette eau dans un réservoir d'alimentation 110 fournissant l'eau nécessaire au remplissage de la colonne d'alimentation verticale 10 de la génératrice 1. À cette fin, l'on peut prévoir une pompe 150, préférablement alimentée en énergie au moyen de panneaux photovoltaïques 160 ou par éolienne 170, afin de retourner l'eau du réservoir de collecte 120 au réservoir d'alimentation 110. Ce système de pompage opère à la manière d'une station de transfert d'énergie par pompage (ou « STEP ») permettant d'exploiter l'énergie électrique excédentaire produite par les panneaux photovoltaïques 160 et/ou l'éolienne 170 afin de pomper l'eau récoltée dans le réservoir de collecte 120 et la retourner dans le réservoir d'alimentation 110. L'on comprendra à cet égard que la pompe 150 n'a pas besoin d'être opérée en continu, mais uniquement périodiquement afin de retourner l'eau récoltée vers le réservoir d'alimentation 110, permettant dès lors un fonctionnement en circuit fermé.

L'on comprendra de manière générale que diverses modifications et/ou améliorations évidentes pour l'homme du métier peuvent être apportées aux modes de réalisation décrits dans la présente description sans sortir du cadre de l'invention défini par les revendications annexées.

Dans une variante de l'invention, l'on pourrait par exemple envisager de disposer le dispositif convertisseur à l'intérieur du réservoir étanche, de sorte qu'il ne soit pas nécessaire que l'axe de sortie du dispositif formant piston émerge du réservoir étanche.

Par ailleurs, bien que les modes de réalisation de l'invention aient été présentés en rapport à l'utilisation d'eau comme source d'énergie renouvelable, tout autre liquide pourrait fondamentalement être utilisé.

### LISTE DES SIGNES DE RÉFÉRENCE UTILISÉS DANS LA PRÉSENTE DESCRIPTION ET DANS LES DESSINS

- 1: génératrice
- 10: colonne d'alimentation verticale
- 10A: colonne d'eau
- 20: vanne d'admission
- 30: réservoir étanche
- 30A: partie supérieure du réservoir étanche 30
- 30B: partie inférieure du réservoir étanche 30
- 40: vanne d'échappement
- 50: dispositif formant piston
- 51: première portion (portion supérieure) formant flotteur du dispositif formant piston 50
- 52: seconde portion (portion inférieure) formant axe de sortie du dispositif formant piston 50 / axes de sortie individuels
- 52A: partie de l'axe de sortie 52 émergeant du réservoir étanche 30
- 52B: partie de l'axe de sortie 52 disposée à l'intérieur du réservoir étanche 30
- 55: manchettes compressibles
- 60: dispositif convertisseur
- 100: installation comprenant la génératrice 1
- 110: réservoir d'alimentation permettant d'alimenter en eau la colonne d'alimentation verticale 10 de la génératrice 1
- 120: réservoir de collecte permettant de récupérer l'eau émanant du réservoir étanche 30 de la génératrice 1
- 150: pompe
- 160: panneaux photovoltaïques
- 170: éolienne
- H: hauteur de la colonne d'eau 10A (avant ouverture de la vanne d'admission 20)
- H*: hauteur de la colonne d'eau 10A (après ouverture de la vanne d'admission 20 et mouvement du dispositif formant piston 50 en position basse)
- V₅₅: volume compressible défini par la manchette compressible 55, dépourvu de liquide, englobant la partie 52B de l'axe de sortie 52 disposée à l'intérieur du réservoir étanche 30

## Revendications

1. Une génératrice (1) comportant :
- une colonne d'alimentation verticale (10) apte à être remplie d'une certaine quantité de liquide ;
- une vanne d'admission (20) disposée à la base de la colonne d'alimentation verticale (10) ;
- un réservoir étanche (30) en communication avec la colonne d'alimentation verticale (10) via ladite vanne d'admission (20), lequel réservoir étanche (30) est apte à être rempli de liquide ;
- une vanne d'échappement (40) disposée sur ledit réservoir étanche (30) et apte à libérer la pression engendrée dans ledit réservoir étanche (30) ;
- un dispositif formant piston (50) disposé à l'intérieur dudit réservoir étanche (30) de sorte à être immergé dans le liquide contenu dans le réservoir étanche (30), lequel dispositif formant piston (50) est apte à être mis en mouvement alternatif entre une position haute et une position basse, le dispositif formant piston (50) comportant une première portion formant flotteur (51) apte à amener le dispositif formant piston (50) dans la position haute et une seconde portion formant axe de sortie (52) ; et
- un dispositif convertisseur (60) couplé à l'axe de sortie (52), lequel dispositif convertisseur (60) est apte à convertir le mouvement alternatif du dispositif formant piston (50) en énergie mécanique ou électrique,
ladite génératrice (1) étant configurée de sorte que, en fonctionnement, le réservoir étanche (30) est rempli de liquide, et de sorte à répéter la séquence de phases opératoires suivantes afin d'induire le mouvement alternatif du dispositif formant piston (50), à savoir :
- une première phase opératoire durant laquelle la vanne d'admission (20) est fermée et la colonne d'alimentation verticale (10) est remplie de liquide de manière à former une colonne de liquide (10A) au-dessus du réservoir étanche (30) ;
- une deuxième phase opératoire durant laquelle la vanne d'échappement (40) est fermée et la vanne d'admission (20) est ouverte afin de mettre en communication la colonne d'alimentation verticale (10) et le réservoir étanche (30), engendrant une augmentation de la pression dans le réservoir étanche (30) et causant un déplacement en position basse du dispositif formant piston (50) ; et
- une troisième phase opératoire durant laquelle la vanne d'admission (20) est fermée et la vanne d'échappement (40) est ouverte afin de libérer la pression excédentaire formée à l'intérieur du réservoir étanche (30), permettant au dispositif formant piston (50) de retourner en position haute sous l'action de la première portion formant flotteur (51).

2. La génératrice (1) selon la revendication 1, dans laquelle la seconde portion formant axe de sortie (52) comporte une pluralité d'axes de sortie individuels (52),
et dans laquelle chaque axe de sortie individuel (52) est préférablement couplé à un dispositif de flottaison qui lui est propre, les dispositifs de flottaison étant couplés les uns aux autres afin de constituer la première portion formant flotteur (51) du dispositif formant piston (50).

3. La génératrice (1) selon la revendication 1 ou 2, dans laquelle chaque axe de sortie (52) est pourvu d'une manchette compressible (55) assurant une étanchéité entre le liquide contenu dans le réservoir étanche (30) et une partie (52B) de l'axe de sortie (52) disposée à l'intérieur du réservoir étanche (30), la manchette compressible (55) définissant un volume compressible (V₅₅) dépourvu de liquide englobant la partie (52B) de l'axe de sortie (52) disposée à l'intérieur du réservoir étanche (30).

4. La génératrice (1) selon l'une quelconque des revendications précédentes, dans laquelle la première portion formant flotteur (51) forme également tête du dispositif formant piston (50).

5. La génératrice (1) selon l'une quelconque des revendications précédentes, dans laquelle l'axe de sortie (52) émerge en partie (52A) à l'extérieur dudit réservoir étanche (30),
et dans laquelle le dispositif convertisseur (60) est couplé à la partie (52A) de l'axe de sortie (52) émergeant à l'extérieur du réservoir étanche (30).

6. La génératrice (1) selon la revendication 5, en dépendance de la revendication 3, dans laquelle la manchette compressible (55) est interposée entre la première portion formant flotteur (51) et une paroi intérieure du réservoir étanche (30).

7. La génératrice (1) selon la revendication 5 ou 6, dans laquelle l'axe de sortie (52) émerge au travers d'une partie inférieure (30B) du réservoir étanche (30).

8. La génératrice (1) selon l'une quelconque des revendications précédentes, dans laquelle le dispositif convertisseur (60) comporte un mécanisme apte à convertir le mouvement alternatif du dispositif formant piston (50) en un mouvement rotatif,
et dans laquelle le dispositif convertisseur (60) comporte en outre préférablement un alternateur entraîné par le mouvement rotatif afin de produire de l'énergie électrique.

9. La génératrice (1) selon l'une quelconque des revendications précédentes, comportant en outre un dispositif de commande automatique de l'ouverture et de la fermeture des vannes d'admission et d'échappement (20, 40), tel un distributeur mécanique.

10. La génératrice (1) selon l'une quelconque des revendications précédentes, comprenant en outre un démarreur pour lancer la rotation d'un volant d'inertie couplé à la génératrice (1), la génératrice (1) étant configurée afin d'entretenir la mise en rotation du volant d'inertie.

11. La génératrice (1) selon l'une quelconque des revendications précédentes, dans laquelle la colonne d'alimentation verticale (10) est configurée pour permettre la formation d'une colonne de liquide (10A) présentant une hauteur (H) de l'ordre de 50 cm à 150 cm,
et dans laquelle le diamètre interne de la colonne d'alimentation verticale (10) est préférablement inférieur à 20 cm.

12. La génératrice (1) selon l'une quelconque des revendications précédentes, dans laquelle la capacité du réservoir étanche (30) est de l'ordre de 20 à 50 litres.

13. Une installation (100) comportant une génératrice (1) selon l'une quelconque des revendications précédentes alimentée en liquide, tel que de l'eau, en particulier au moyen d'un réservoir de collecte d'eau de pluie ou d'une alimentation d'eau courante.

14. L'installation (100) selon la revendication 13, comportant en outre :
un réservoir d'alimentation (110) apte à fournir le liquide nécessaire au remplissage de la colonne d'alimentation verticale (10) ;
un réservoir de collecte (120) apte à récupérer le liquide émanant du réservoir étanche (30) ; et
une pompe (150) apte à retourner le liquide du réservoir de collecte (120) au réservoir d'alimentation (110),
la pompe (150) étant préférablement alimentée en énergie au moyen de panneaux photovoltaïques (160) ou par éolienne (170).

15. Un procédé de génération d'énergie mécanique ou électrique utilisant la génératrice (1) selon l'une quelconque des revendications 1 à 12 ou l'installation (100) selon la revendication 13 ou 14, comportant les étapes suivantes :
a) fermeture de la vanne d'admission (20) et remplissage de la colonne d'alimentation verticale (10) au moyen de liquide de manière à former une colonne de liquide (10A) au-dessus du réservoir étanche (30) rempli de liquide ;
b) fermeture de la vanne d'échappement (40) et ouverture de la vanne d'admission (20) afin de mettre en communication la colonne d'alimentation verticale (10A) et le réservoir étanche (30), engendrant une augmentation de la pression dans le réservoir étanche (30) et causant un déplacement en position basse du dispositif formant piston (50) ;
c) fermeture de la vanne d'admission (20) et ouverture de la vanne d'échappement (40) afin de libérer la pression excédentaire formée à l'intérieur du réservoir étanche (30), permettant au dispositif formant piston (50) de retourner en position haute sous l'action de la première portion formant flotteur (51) ; et
d) répétition des étapes a) à d) de sorte à induire le mouvement alternatif du dispositif formant piston (50) et permettre au dispositif convertisseur (60) de convertir ce mouvement alternatif en énergie mécanique ou électrique.

## Patentansprüche

1. Ein Generator (1), der aufweist:
- eine vertikale Versorgungssäule (10), die geeignet ist, um mit einer bestimmten Menge an Flüssigkeit gefüllt zu werden;
- ein Einlassventil (20), das an der Basis der vertikalen Versorgungssäule (10) angeordnet ist;
- ein dichtes Reservoir (30) in Verbindung mit der vertikalen Versorgungssäule (10) über das Einlassventil (20), wobei das dichte Reservoir (30) geeignet ist, um mit Flüssigkeit gefüllt zu werden;
- ein Auslassventil (40) das auf dem dichten Reservoir (30) angeordnet ist und geeignet ist, um den Druck abzulassen, der in dem dichten Reservoir (30) erzeugt wird;
- eine Vorrichtung (50), die einen Kolben ausbildet, die innerhalb des dichten Reservoirs (30) so angeordnet ist, dass sie in die Flüssigkeit eingetaucht ist, die in dem dichten Reservoir (30) enthalten ist, wobei die Vorrichtung (50), die den Kolben ausbildet, geeignet ist, um in eine Hin- und Herbewegung zwischen einer oberen Position und einer unteren Position gebracht zu werden, wobei die Vorrichtung (50), die den Kolben ausbildet, einen ersten Abschnitt (51), der einen Schwimmer ausbildet, der geeignet ist, um die Vorrichtung (50), die den Kolben ausbildet, in die obere Position zu bringen, und einen zweiten Abschnitt aufweist, der eine Ausgangsachse (52) ausbildet; und
- eine Wandlervorrichtung (60), die mit der Ausgangsachse (52) gekoppelt ist, wobei die Wandlervorrichtung (60) geeignet ist, um die Hin- und Herbewegung der Vorrichtung (50), die den Kolben ausbildet, in mechanische oder elektrische Energie umzuwandeln,
wobei der Generator (1) so konfiguriert ist, dass, in Betrieb, das dichte Reservoir (30) mit Flüssigkeit gefüllt ist, und so, dass die Sequenz von folgenden Operationsphasen wiederholt wird, um die Hin- und Herbewegung der Vorrichtung (50), die den Kolben ausbildet, einzuleiten, nämlich:
- eine erste Operationsphase, während der das Einlassventil (20) geschlossen ist und die vertikale Versorgungssäule (10) mit Flüssigkeit gefüllt ist, um eine Flüssigkeitssäule (10A) über dem dichten Reservoir (30) auszubilden;
- eine zweite Operationsphase, während der das Auslassventil (40) geschlossen ist und das Einlassventil (20) geöffnet ist, um die vertikale Versorgungssäule (10) und das dichte Reservoir (30) in Verbindung zu setzen, wobei eine Erhöhung des Drucks in dem dichten Reservoir (30) erzeugt und eine Verschiebung in die untere Position der Vorrichtung (50), die den Kolben ausbildet, verursacht wird; und
- eine dritte Operationsphase, während der das Einlassventil (20) geschlossen ist und das Auslassventil (40) geöffnet ist, um den überschüssigen Druck, der innerhalb des dichten Reservoirs (30) ausgebildet wird, abzulassen, wobei es der Vorrichtung (50), die den Kolben ausbildet, ermöglicht wird, unter der Einwirkung des ersten Abschnitts (51), der den Schwimmer ausbildet, in die obere Position zurückzukehren.

2. Der Generator (1) nach Anspruch 1, wobei der zweite Abschnitt, der die Ausgangsachse (52) ausbildet, eine Vielzahl von individuellen Ausgangsachsen (52) aufweist,
und wobei jede individuelle Ausgangsachse (52) vorzugsweise mit einer Schwimmvorrichtung gekoppelt ist, die ihr eigen ist, wobei die Schwimmvorrichtungen miteinander gekoppelt sind, um den ersten Abschnitt (51), der den Schwimmer ausbildet, der Vorrichtung (50), die den Kolben ausbildet, zu bilden.

3. Der Generator (1) nach Anspruch 1 oder 2, wobei jede Ausgangsachse (52) mit einer komprimierbaren Manschette (55) vorgesehen ist, die eine Dichtheit zwischen der Flüssigkeit, die in dem dichten Reservoir (30) enthalten ist, und einem Teil (52B) der Ausgangsachse (52), der innerhalb des dichten Reservoirs (30) angeordnet ist, sicherstellt, wobei die komprimierbare Manschette (55) ein komprimierbares Volumen (V₅₅) ohne Flüssigkeit definiert, das den Teil (52B) der Ausgangsachse (52) umgibt, der innerhalb des dichten Reservoirs (30) angeordnet ist.

4. Der Generator (1) nach irgendeinem der vorstehenden Ansprüche, wobei der erste Abschnitt (51), der den Schwimmer ausbildet, auch einen Kopf der Vorrichtung (50), die den Kolben ausbildet, ausbildet.

5. Der Generator (1) nach irgendeinem der vorstehenden Ansprüche, wobei die Ausgangsachse (52) zum Teil (52A) außerhalb des dichten Reservoirs (30) auftaucht,
und wobei die Wandlervorrichtung (60) mit dem Teil (52A) der Ausgangsachse (52), der außerhalb des dichten Reservoirs (30) auftaucht, gekoppelt ist.

6. Der Generator (1) nach Anspruch 5 in Abhängigkeit von Anspruch 3, wobei die komprimierbare Manschette (55) zwischen dem ersten Abschnitt (51), der den Schwimmer ausbildet, und einer Innenwand des dichten Reservoirs (30) eingesetzt ist.

7. Der Generator (1) nach Anspruch 5 oder 6, wobei die Ausgangsachse (52) durch ein Bodenteil (30B) des dichten Reservoirs (30) hindurch auftaucht.

8. Der Generator (1) nach irgendeinem der vorstehenden Ansprüche, wobei die Wandlervorrichtung (60) einen Mechanismus aufweist, der geeignet ist, um die Hin- und Herbewegung der Vorrichtung (50), die den Kolben ausbildet, in eine Drehbewegung umzuwandeln,
und wobei die Wandlervorrichtung (60) ferner vorzugsweise ein Wechselstromerzeuger ist, der durch die Drehbewegung angetrieben wird, um elektrische Energie zu produzieren.

9. Der Generator (1) nach irgendeinem der vorstehenden Ansprüche, der ferner eine automatische Steuervorrichtung zum Öffnen und zum Schließen des Einlass- und des Auslassventils (20, 40) aufweist, wie zum Beispiel einen mechanischen Verteiler.

10. Der Generator (1) nach irgendeinem der vorstehenden Ansprüche, umfassend ferner einen Starter zum Initiieren der Drehung eines Schwungrads, das mit dem Generator (1) gekoppelt ist, wobei der Generator (1) konfiguriert ist, um das Versetzen des Schwungrads in Drehung zu erhalten.

11. Der Generator (1) nach irgendeinem der vorstehenden Ansprüche, wobei die vertikale Versorgungssäule (10) zum Ermöglichen der Ausbildung einer Flüssigkeitssäule (1 0A) konfiguriert ist, die eine Höhe (H) in der Größenordnung von 50 cm bis 150 cm vorweist,
und wobei der Innendurchmesser der vertikalen Versorgungssäule (10) vorzugsweise kleiner als 20 cm ist.

12. Der Generator (1) nach irgendeinem der vorstehenden Ansprüche, wobei die Kapazität des dichten Reservoirs (30) in der Größenordnung von 20 bis 50 Liter ist.

13. Eine Anlage (100), die einen Generator (1) nach irgendeinem der vorstehenden Ansprüche aufweist, der mit Flüssigkeit versorgt wird, wie zum Beispiel Wasser, insbesondere mittels eines Regenwassersammelreservoirs oder einer Fließwasserversorgung.

14. Die Anlage (100) nach Anspruch 13, die ferner aufweist:
ein Versorgungsreservoir (110), das geeignet ist, um die Flüssigkeit bereitzustellen, die für die Füllung der vertikalen Versorgungssäule (10) nötig ist;
ein Sammelreservoir (120), das geeignet ist, um die Flüssigkeit abzufangen, die von dem dichten Reservoir (30) ausgeht; und
eine Pumpe (150), die geeignet ist, um die Flüssigkeit des Sammelreservoirs (120) zu dem Versorgungsreservoir (110) zurückzubringen,
wobei die Pumpe (150) vorzugsweise mittels Photovoltaikmodulen (160) oder durch eine Windkraftmaschine (170) mit Energie versorgt wird.

15. Ein Verfahren zum Generieren von mechanischer oder elektrische Energie unter Verwendung des Generators (1) nach irgendeinem der Ansprüche 1 bis 12 oder der Anlage (100) nach dem Anspruch 13 oder 14, das die folgenden Schritte aufweist:
a) Schließen des Einlassventils (20) und Füllen der vertikalen Versorgungssäule (10) mittels Flüssigkeit, um eine Flüssigkeitssäule (10A) über dem dichten Reservoir (30) auszubilden, das mit Flüssigkeit gefüllt ist;
b) Schließen des Auslassventils (40) und Öffnen des Einlassventils (20), um die vertikale Versorgungssäule (10A) und das dichte Reservoir (30) in Verbindung zu setzen, wobei eine Erhöhung des Drucks in dem dichten Reservoir (30) erzeugt und eine Verschiebung in die untere Position der Vorrichtung (50), die den Kolben ausbildet, verursacht wird;
c) Schließen des Einlassventils (20) und Öffnen des Auslassventils (40), um den überschüssigen Druck, der innerhalb des dichten Reservoirs (30) ausgebildet wird, abzulassen, wobei es der Vorrichtung (50), die den Kolben ausbildet, ermöglicht wird, unter der Einwirkung des ersten Abschnitts (51), der den Schwimmer ausbildet, in die obere Position zurückzukehren; und
d) Wiederholen der Schritte a) bis d), um die Hin- und Herbewegung der Vorrichtung (50), die den Kolben ausbildet, einzuleiten, und es der Wandlervorrichtung (60) zu ermöglichen, diese Hin- und Herbewegung in mechanische oder elektrische Energie umzuwandeln.

## Claims

1. A generator (1) comprising:
- a vertical supply column (10) that can be filled with a certain quantity of liquid;
- an intake valve (20) disposed at a base of the vertical supply column (10);
- a leaktight tank (30) communicating with the vertical supply column (10) via said intake valve (20), which leaktight tank (30) is capable of being filled with liquid;
- an exhaust valve (40) disposed on said leaktight tank (30) and capable of releasing pressure generated in said leaktight tank (30);
- a piston-forming device (50) disposed inside said leaktight tank (30) so as to be immersed in the liquid contained in the leaktight tank (30), which piston-forming device (50) is capable of being set in reciprocating movement between an upper position and a lower position, the piston-forming device (50) comprising a first, float-forming portion (51) capable of bringing the piston-forming device (50) into the upper position and a second portion forming an output shaft (52); and
- a converter device (60) coupled to the output shaft (52), which converter device (60) is capable of converting the reciprocating movement of the piston-forming device (50) into mechanical or electrical energy,
said generator (1) being configured in such a way that, in operation, the leaktight tank (30) is filled with liquid, and in such a way as to repeat the following sequence of operating phases in order to induce the reciprocating movement of the piston-forming device (50), namely:
- a first operating phase during which the intake valve (20) is closed and the vertical supply column (10) is filled with liquid so as to form a column of liquid (10A) above the leaktight tank (30);
- a second operating phase during which the exhaust valve (40) is closed and the intake valve (20) is open in order to connect the vertical supply column (10) and the leaktight tank (30), generating an increase in pressure in the leaktight tank (30) and causing a displacement of the piston-forming device (50) to the lower position; and
- a third operating phase during which the intake valve (20) is closed and the exhaust valve (40) is open in order to release excess pressure formed inside the leaktight tank (30), allowing the piston-forming device (50) to return to the upper position under the action of the first, float-forming portion (51).

2. The generator (1) according to claim 1, wherein the second portion forming the output shaft (52) comprises a plurality of individual output shafts (52),
and wherein each individual output shaft (52) is preferably coupled to a dedicated float device, the float devices being coupled to one another in order to constitute the first, float-forming portion (51) of the piston-forming device (50).

3. The generator (1) according to claim 1 or 2, wherein each output shaft (52) is provided with a compressible cuff (55) ensuring sealing between the liquid contained in the leaktight tank (30) and a part (52B) of the output shaft (52) that is disposed inside the leaktight tank (30), the compressible cuff (55) defining a compressible volume (V₅₅) devoid of liquid covering the part (52B) of the output shaft (52) that is disposed inside the leaktight tank (30).

4. The generator (1) according to any one of the preceding claims, wherein the first, float-forming portion (51) also forms a head of the piston-forming device (50).

5. The generator (1) according to any one of the preceding claims, wherein the output shaft (52) emerges in part (52A) outside the leaktight tank (30),
and wherein the converter device (60) is coupled to the part (52A) of the output shaft (52) emerging outside the leaktight tank (30).

6. The generator (1) according to claim 5, when depending on claim 3, and wherein the compressible cuff (55) is interposed between the first, float-forming portion (51) and an internal wall of the leaktight tank (30).

7. The generator (1) according to claim 5 or 6, wherein the output shaft (52) emerges through a bottom part (30B) of the leaktight tank (30).

8. The generator (1) according to any one of the preceding claims, wherein the converter device (60) comprises a mechanism capable of converting the reciprocating movement of the piston-forming device (50) into a rotary movement,
and wherein the converter device (60) preferably further comprises an alternator driven by the rotary movement in order to produce electrical energy.

9. The generator (1) according to any one of the preceding claims, further comprising a device for automatically controlling opening and closing of the intake and exhaust valves (20, 40), such as a mechanical distributor.

10. The generator (1) according to any one of the preceding claims, further comprising a starter for initiating rotation of a flywheel coupled to the generator (1), the generator (1) being configured so as to maintain rotation of the flywheel.

11. The generator (1) according to any one of the preceding claims, wherein the vertical supply column (10) is configured to allow formation of a column of liquid (10A) having a height (H) of the order of 50 cm to 150 cm,
and wherein the inner diameter of the vertical supply column (10) is preferably of less than 20 cm.

12. The generator (1) according to any one of the preceding claims, wherein the capacity of the leaktight tank (30) is of the order of 20 to 50 litres.

13. An installation (100) comprising a generator (1) according to any one of the preceding claims that is supplied with liquid, such as water, in particular by means of a rainwater collection tank or a running water supply.

14. The installation (100) according to claim 13, further comprising:
a supply tank (110) capable of supplying the liquid necessary for filling the vertical supply column (10);
a collection tank (120) capable of recovering the liquid coming from the leaktight tank (30); and
a pump (150) capable of returning the liquid from the collection tank (120) to the supply tank (110),
the pump being preferably supplied with energy produced by photovoltaic panels (160) or by a wind turbine (170).

15. A method of generating mechanical or electrical energy using the generator (1) according to any one of claims 1 to 12 or an installation (100) according to claim 13 or 14, comprising the following steps:
a) closing the intake valve (20) and filling the vertical supply column (10) with liquid so as to form a column of liquid (10A) above the leaktight tank (30) which is filled with liquid;
b) closing the exhaust valve (40) and opening the intake valve (20) in order to connect the vertical supply column (10) and the leaktight tank (30), generating an increase in pressure in the leaktight tank (30) and causing a displacement of the piston-forming device (50) to the lower position;
c) closing the intake valve (20) and opening the exhaust valve (40) so as to release excess pressure formed inside the leaktight tank (30), allowing the piston-forming device (50) to return to the upper position under the action of the first, float-forming portion (51); and
d) repeating steps a) to d) so as to induce the reciprocating movement of the piston-forming device (50) and allow the converter device (60) to convert this reciprocating movement into mechanical or electrical energy.
